# EUROPÄISCHE PATENTSCHRIFT

(11) **EP 2 729 539 B1**
(45) Veröffentlichungstag und Bekanntmachung des Hinweises auf die Patenterteilung: **06.09.2017**
(21) Anmeldenummer: 12734891.0
(22) Anmeldetag: 04.07.2012
(51) Int. Cl.: C09D 5/08, C09D 7/12, C08K 3/34

(54) **KORROSIONSSCHUTZSCHICHT**
CORROSION PROTECTION LAYER
COUCHE ANTI-CORROSION

(30) Priorität: 04.07.2011 DE 102011078616
(43) Veröffentlichungstag der Anmeldung: 14.05.2014
(73) Patentinhaber: Mare Solutions GmbH, 28199 Bremen (DE)
(72) Erfinder: TEKBAS, Franz, 48529 Nordhorn (DE); PAUL, Heinz Werner, 48531 Nordhorn (DE)
(74) Vertreter: Scholz, Volker
(86) Internationale Anmeldenummer: PCT/EP2012/063044
(87) Internationale Veröffentlichungsnummer: WO 2013/004751

(56) Entgegenhaltungen:
- WO-A1-2005/047403
- CN-Y- 201 277 411
- DE-A1-102005 046 912
- DE-T2- 69 515 692
- DATABASE WPI Week 198424 Thomson Scientific, London, GB; AN 1984-149213 XP002682273, & JP 59 078267 A (TOA PAINT CO LTD) 7. Mai 1984 (1984-05-07)
- DATABASE WPI Week 200956 Thomson Scientific, London, GB; AN 2009-M05895 XP002682274, & CN 201 277 411 Y (CHINA PETROL NATURAL GAS CO LTD) 22. Juli 2009 (2009-07-22)
- DATABASE WPI Week 199306 Thomson Scientific, London, GB; AN 1993-051415 XP002682280, & SU 1 717 580 A1 (UFA PETROLEUM INST) 7. März 1992 (1992-03-07)
- DATABASE WPI Week 199549 Thomson Scientific, London, GB; AN 1995-381141 XP002682281, & SU 1 124 521 A1 (ORDZHONIKIDZE CHEM PHARM INST) 27. Mai 1995 (1995-05-27)
- NADIA HAMMOUDA: "The Corrosion Protection Behaviour of Zinc Rich Epoxy Paint in 3% NaCl Solution", ADVANCES IN CHEMICAL ENGINEERING AND SCIENCE, Bd. 01, Nr. 02, 30. April 2011 (2011-04-30), Seiten 51-60, XP55036276, ISSN: 2160-0392, DOI: 10.4236/aces.2011.12009
- WANG MINGCHAO ET AL: "Chemical Durability and Mechanical Properties of Alkali-proof Basalt Fiber and its Reinforced Epoxy Composites", JOURNAL OF REINFORCED PLASTICS AND COMPOSITES, Bd. 27, Nr. 4, 1. Januar 2008 (2008-01-01) , Seiten 393-407, XP55036201, ISSN: 0731-6844, DOI: 10.1177/0731684407084119
- DATABASE WPI Week 200356 Thomson Scientific, London, GB; AN 2003-588426 -& CN 1 421 351 A (ZHOU X) 4 June 2003 (2003-06-04)
- DATABASE WPI Week 200826 Thomson Scientific, London, GB; AN 2008-D59280 -& CN 201 021 739 Y (WU F) 13 February 2008 (2008-02-13)
- GÃ 1/4 NTER RIECHE: "Instandsetzung von Stahlbeton bei SchÃ den infolge Korrosion der Bewehrung", DEUTSCHE BAUZEITSCHRIFT D.B.Z,, no. 7, 1 July 1982 (1982-07-01), pages 1011-1017, XP001477252,

## Beschreibung

Die vorliegende Erfindung betrifft die Verwendung von mineralischen Fasern oder Filamenten zur Verbesserung der Korrosionsschutzwirkung einer Korrosionsschutzschicht.

Metallhaltige Werkstoffe sind unter Umweltbedingungen Korrosion ausgesetzt. Dabei führt Korrosion zu Strukturveränderungen an der Oberfläche und auch in den Tiefen des jeweiligen Werkstoffes, die zur Folge haben können, dass der Werkstoff seine Funktion nicht mehr erfüllen kann. Insbesondere sind hier eine schwindende mechanische Belastarbeit zu erwähnen. Dabei ist das Fortschreiten von Korrosion abhängig von den konkret vorherrschenden Umweltbedingungen. Besonders kritisch ist Korrosion in Bereichen, in denen eine hohe Feuchtigkeit vorherrscht und ganz besonders in Salzwasser (und hier insbesondere in der Wasserwechselzone). Ein technisch perfekter Korrosionsschutz besteht noch nicht. Sämtliche Korrosionsschutzmaßnahmen aus dem Stand der Technik führen faktisch nur zu einer Verlangsamung des Korrosionsprozesses, können ihn daher nicht vollständig verhindern.

Es besteht daher ein ständiger Bedarf an verbessertem Korrosionsschutz und/oder Alternativen zu bestehendem Korrosionsschutz, um eine Vielzahl von Anwendungsbereichen abzudecken. Im Stand der Technik wird Korrosionsschutz regelmäßig durch Beschichtungen der vor Korrosion zu schützenden Oberflächen erzielt. Im weitesten Sinne zu Beschichtungen gehören dabei auch Umwandlungen der jeweiligen Oberfläche wie z. B. die Eloxierung von Aluminium. Häufig werden die Beschichtungen aus Kunstoffen / Harzen bestehen, weil mit diesen Materialien sich zuverlässig geschlossene Flächen erzeugen lassen sowie bei entsprechender Materialauswahl die Beschichtung selbst einen guten Widerstand gegen die Korrosion bietet.

Aufgabe der vorliegenden Erfindung war es einen Weg anzugeben, den Korrosionsschutz von Korrosionsschutzschichten zu verbessern.

Erfindungsgemäß wird diese Aufgabe gelöst durch die Verwendung von mineralischen Fasern oder Filamenten zur Verbesserung der Korrosionsschutzwirkung einer Korrosionsschutzschicht, wobei ein metallhaltiges Substrat gegen Korrosion geschützt wird, wobei die Korrositionsschutzwirkung nach dem Kesternichtest gemäß den Normen DIN EN ISO 6988 und DIN 50018 und/oder gemäß dem Kondensatwasserwechseltest nach RPB 2010 (BAW Karlsruhe) und/oder die Korrosionsschutzwirkung im Meer, insbesondere in der Nordsee, festgestellt wird, wobei die mineralischen Fasern oder Filamente > 50 Gew.-% SiO₂ umfassen, wobei die Korrosionsschutzschicht eine Matrix aus einem Material umfasst, ausgewählt aus der Gruppe bestehend aus Lack und Klebstoff und wobei die mineralischen Fasern oder Filamente in Form eines Flächengebildes eingesetzt werden, wobei das Flächengebilde ausgewählt ist aus der Gruppe bestehend aus Gewebe, Gewirk, Geflecht und Vlies und/oder in Multiaxialtechnik erstellt wurde, und vollständig von der Matrix umschlossen sind, wobei es sich bei dem methallhaltigen Substrat um Wasserfahrzeuge, Stahlbeton oder um Windenergieanlagen handelt, wobei die mineralischen Fasern oder Filamente Basaltfasern sind. Eine Verbesserung der Korrosionsschutzwirkung einer Korrosionsschutzschicht kann im Sinne der vorliegenden Erfindung bevorzugt durch den Kesternichtest festgestellt. Der Kesternichtest wird gemäß den Normen DIN EN ISO 6988 und DIN 50018 durchgeführt. Dabei werden die zu prüfenden Teile in eine Prüfkammer gelegt und warmer, feuchter Luft in Verbindung mit einer bestimmten Menge an Schwefeldioxid ausgesetzt. Bevorzugt erfolgt die Prüfung in Zyklen von je 24 Stunden. Alternativ oder zusätzlich kann die Verbesserung der Korrosionsschutzwirkung im Rahmen des in Beispiel 2 beschriebenen Testverfahrens überprüft werden. Besonders bevorzugt wird die Verbesserung der Korrosionsschutzwirkung im Meer insbesondere in der Nordsee überprüft.

Eine Korrosionsschutzschicht im Sinne der vorliegenden Anmeldung ist eine Schicht, die in der Lage ist, ein korrosionsanfälliges Substrat gegenüber Korrosion zu schützen indem sich die Korrosion verlangsamt. Korrosionsschutzschichten entsprechend der vorliegenden Anmeldung umfassen Lacke und Klebstoffe.

Der Einsatz von anorganischen Fasern und/oder Filamenten in Schichtmaterialien, auch in solchen zum Korrosionsschutz ist im Prinzip bekannt.

So offenbart z. B. die DE 195 14 190 den Einsatz von organischen oder anorganischen Fasern in Korrosionsschutzschichten aus Polyurethan. Die in diesem Dokument offenbarte Funktion ist allerdings die eines Füllstoffes mit dem Ziel die rheologischen Eigenschaften der Harzmasse einzustellen sowie die verwendbaren Schichtdicken in gewünschter Form zu beeinflussen. Dieses Dokument legt jedoch nicht nahe, dass schon das Vorhandensein entsprechender Fasern den Korrosionsschutz einer entsprechenden Korrosionsschutzschicht verbessert.

Die EP 1 682 624 offenbart den Einsatz von anorganischen Fasern in Kombination mit Epoxidklebern. Dabei kann der Epoxidkleber als Korrosionsschutzschicht aufgefasst werden. In dem genannten Dokument ist jedoch als Funktion der anorganischen Fasern lediglich das Verhindern des Anhaftens von Mikroorganismen offenbart. Eine eigene Korrosionsschutzwirkung der Fasern ist nicht erwähnt.

Es muss betont werden, dass unter Korrosionsschutz im Sinne dieser Anmeldung insbesondere Schutz vor den eigentlich korrodierenden (aggressiven) Verbindungen bedeutet. Im letztgenannten Dokument ist durch das Verhindern des Anlagerns von Mikroorganismen lediglich ein (mittelbarer) Korrosionsschutz offenbart sein, da eine solche Anlagerung durch die von Mikroorganismen produzierten Verbindungen korrosionsbeschleunigend wirkt.

Korrosionsschutz im Sinne der vorliegenden Erfindung ist aber unabhängig von mittelbaren Korrosionsrisiken, (wie z. B. Mikroorganismenanlagerung oder mechanischem Stress), die die jeweiligen Korrosionsschutzschichten in ihrer Funktion schwächen könnten. Im oben erwähnten Kesternichtest spielen weder mechanische Belastungen noch Mikroorganismen eine Rolle. Dieser Test wird jedoch zum Vergleich als Basis für das Vorliegen der hier beschriebenen Erfindung hinzugezogen. Dabei ist es so, dass in den Korrosionsvergleichstests Schichten verglichen werden, die sowohl in Ihrer Ausdehnung als auch in Ihrer Zusammensetzung sich lediglich im Vorhandensein oder Nichtvorhandensein der erfindungsgemäß zu verwendenden Fasern oder Filamente unterscheiden. In der faserfreien Schicht wird dabei das Volumen der Fasern in der faserhaltigen Schicht durch das Matrixmaterial der Schicht ersetzt.

Wie oben bereits angedeutet war es aus dem Stand der Technik nicht zu erwarten, dass in Korrosionvergleichstests wie z. B. dem Kesternichtest beim Vorhandensein von mineralischen Fasern verbesserte Ergebnisse erzielt werden würden. Dieses ist insbesondere deshalb überraschend, als die Korrosionsschutzschicht durch das Vorhandensein entsprechender Fasern in Ihrer Homogenität (selbstverständlich) deutlich verringert ist, so dass eine Vielzahl von negativen Effekten wie z. B. Eindringlücken für aggressive Chemikalien nicht ausgeschlossen werden konnten.

Im Rahmen der vorliegenden Erfindung umfasst die Korrosionsschutzschicht eine Matrix aus Material ausgewählt aus der Gruppe bestehend aus Lack und Klebstoff.

Ein Klebstoff im Sinne der vorliegenden Erfindung ist ein Material, dass als nichtmetallischer Werkstoff Fügeteile durch Flächenhaftung und innere Festigkeit (Adhäsion und Kohäsion) verbinden kann.

Ein Lack im Sinne der vorliegenden Erfindung ist ein flüssiger oder pulverförmiger Beschichtungsstoff, der durch physikalische oder chemische Vorgänge zu einem durchgehenden, festen Film aufgebaut wird.

In Kombination mit Lacken und/oder Klebstoffen sind die erfindungsgemäß einzusetzenden mineralischen Fasern hinsichtlich der Korrosionsschutzverbesserung besonders wirksam.

Bevorzugt ist die Matrix auf einem Polymer auf Basis von Epoxid, Urethan, Acrylat, Alkyd, Vinylacetat, sowie deren Mischungen und deren Copolymeren basiert.

Diese Materialien in Kombination mit mineralischen Fasern lassen sich für besonders viele Anwendungszwecke einsetzen und zeigen ein gutes Eigenschaftsfenster aus Anwendungsfreundlichkeit und verbessertem Korrosionsschutz.

Besonders bevorzugt ist, dass das Matrixmaterial hierbei auf Basis von Epoxid, ganz besonders bevorzugt auf Basis von Urethan ist.

Mit diesen Materialien lassen sich die besten Korrosionsschutzergebnisse erzielen.

Bevorzugt ist, dass der Anteil der Fasern in der jeweiligen Korrosionsschutzschicht 20 - 80 Gew.-%, weiter bevorzugt 30 - 70 Gew.-% und besonders bevorzugt 40 - 60 Gew.-% beträgt.

Ebenfalls im Sinne der Erfindung ist es bevorzugt, dass die Korrosionsschutzschichten für die erfindungsgemäße Verwendung eine Dicke von 300 - 2200 µm, bevorzugt von 420 - 1200 µm, weiter bevorzugt 780 - 1200 µm und ganz besonders bevorzugt 1200 - 2000 µm besitzen.

In den bevorzugten Varianten lassen sich dabei besonders gute zusätzliche Korrosionsschutzeffekte erzielen.

Bevorzugt ist eine erfindungsgemäße Verwendung, wobei die mineralischen Fasern oder Filamente enthaltende Schicht auf Seiten des zu schützenden Substrates wenigstens teilweise mit einer zinkhaltigen Schicht unterlegt ist.

Bevorzugt ist, dass diese zinkhaltige Schicht zu ≥ 50 Gew.-%, weiter bevorzugt ≥ 70 Gew.-% und besonders bevorzugt ≥ 85 Gew.-% Zink enthält bezogen auf das Gesamtgewicht der Schicht nach Aushärtung/Trocknung.

Weiter bevorzugt ist, dass die zinkhaltige Schicht eine Schicht auf Basis von Epoxidharz ist.

Überraschenderweise hat sich herausgestellt, dass die Unterlegung der für die erfindungsgemäße Verwendung vorgesehene Korrosionsschutzschicht mit den entsprechenden zinkhaltigen Schichten die Anhaftung der Korrosionsschutzschicht deutlich verbessert und/oder die Korrosionsschutzwirkung nochmals wesentlich erhöht. Entsprechend der vorliegenden Erfindung werden als mineralische Fasern oder Filamente Basaltfasern verwendet. Besonders bevorzugt haben die eingesetzten Basaltfasern dabei einen Al₂O₃-Gehalt von ≥ 16 Gew.-% und einen CaO und/oder MgO-Gehalt von ≤ 8 Gew.-%, besonders bevorzugt von 5 - 8 Gew.-%.

Die erfindungsgemäß besonders bevorzugt einzusetzenden Basaltfasern sind endlos gezogen und können z. B. hergestellt werden wie in einem Verfahren wie in der DE 29 09 148 oder DE 35 09 424 beschrieben.

Die erfindungsgemäß besonders bevorzugt einzusetzenden Basaltfasern weisen eine thermische Beständigkeit im Bereich von mindestens -260 °C bis +600 °C auf und haben bevorzugt eine Sinterungstemperatur im Bereich von 1.050 °C. Bevorzugte Wärmeleitzahlen dieser Fasern sind im Bereich von 0,031 - 0,038 K. Sie weisen bevorzugt ein Faserdurchmesser von 7 - 17 µm auf und/oder einen Tex von 28 - 2500, weiter bevorzugt von 30 - 2000. Das bevorzugte spezifische Gewicht beträgt 2,6 - 2,8 kg/l. Bevorzugt trägt der Gewichtsverlust bei Behandlung mit kochendem Wasser etwa 1,6 %, bei Behandlung in 2n NaOH 2,75 % in 2n HCl 2,2 %, jeweils bei Behandlung für drei Stunden. Erfindungsgemäß werden die mineralischen Fasern oder Filamente in Form eines Flächengebildes eingesetzt werden. "Flächengebilde" ist in diesem Zusammenhang so zu verstehen, dass die Fasern zu erheblichen Bestandteilen (≥ 50 Gew.-%, weiter bevorzugt ≥ 75 Gew.-%, weiter bevorzugt ≥ 90 Gew.-%) nicht als Einzelfasern vorliegen, sondern miteinander verbunden sind, wobei das durch diese Verbindung entstehende Gebilde hinsichtlich seiner lateralen Ausdehnungen bevorzugt um ein Faktor von wenigstens 10 jeweils größer ist als hinsichtlich seiner Dicke. Erfindungsgemäß ist das Flächengebilde ausgewählt aus der Gruppe bestehend aus Gewebe, Gewirk, Geflecht und Vlies und/oder in Multiaxial- oder Einlegetechnik erstellt wurde. Stoffe in Multiaxial- oder Einlegetechnik sind in Längs- und Querrichtungen deutlich höher durch Zug belastbar.

Bevorzugt umfasst das erfindungsgemäß einzusetzende Flächengebilde miteinander verwebte Stränge von Kett- und Schussfäden, und ganz besonders bevorzugt besteht es aus solchen Strängen.

Dabei ist erfindungsgemäß besonders bevorzugt, dass das erfindungsgemäß einzusetzende Gewebe in Form eines Flächengebildes mit miteinander verwebten Strängen von Kett- und Schussfäden in mehrlagiger Form besteht oder solche Bereiche umfasst. Bevorzugt besteht ein Kettfadenstrang aus einer Vielzahl einzelner paralleler Filamente. Der Schussfadenstrang besteht bevorzugt ebenfalls aus einer Vielzahl Filamente.

Bevorzugt ist, dass die einzelnen Kett- und Schussfäden parallel zueinander liegen und ein in sich geschlossenes Gewebe von geringer Dicke bilden. Um der Gewebekonstruktion eine Festigkeit zu verleihen ist es weiter bevorzugt, die Kett- und Schussfäden an verschiedenen Bindungs- und Verknüpfungspunkten verbindungstechnisch miteinander zu verbinden. Weiterhin ist auch Leinwand- oder Körperbindung als Drehverbindung möglich.

Ganz besonders bevorzugt ist das bevorzugt erfindungsgemäß zu verwendende Flächengebilde eine gewebte geschlossene Fläche. "Geschlossen" bedeutet bevorzugt, dass sie nicht durch das Tageslicht durchstrahlbar ist.

Zu weiteren Ausbildungen von Gewebestrukturen sei insbesondere auf DE 198 57 993 C2 verwiesen, die hinsichtlich der Gewebestrukturen auf dem Wege zur Verweisung Bestandteil dieser Anmeldung wird.

Die erfindungsgemäß einzusetzenden Basaltfasern haben eine Reihe von Vorteilen gegenüber Kunststofffasern aber auch gegenüber alternativen mineralischen Fasern: Basaltfasern sind ein Naturprodukt, die selbst wenig korrosionsanfällig ist. Der Rohstoff ist in großen Mengen vorhanden, so dass die entsprechenden Fasern preisgünstig sind, zumal sie in einem Einkomponentenverfahren hergestellt werden können. Auch ist die Beständigkeit gegenüber chemischen und mechanischen Einflüssen hoch. Hinzu kommt, dass bei Basaltfasern, wie aber auch bei anderen anorganischen Fasern, der Korrosionsschutzschicht zusätzlich zur Korrosionsverbesserung noch eine verbesserte Widerstandsfähigkeit gegen mechanische Beschädigung vermittelt wird.

Eine verbesserte Korrosionsschutzwirkung aufgrund der erfindungsgemäßen Verwendung kann dadurch erzielt werden, dass die erfindungsgemäß einzusetzenden Fasern vollständig von der Matrix der Korrosionsschutzschicht umschlossen sind.

Es ist möglich, dass die erfindungsgemäß zu verstärkenden Korrosionsschutzschichten Ein- oder Zweikomponentenkleber als Matrixmaterial umfassen. Bevorzugt sind dabei solche Kleber, die dauerelastisch bleiben, also im ausgehärteten Zustand nicht brechen oder bröckeln. Beispiele hierfür sind Araldit 2013/2014 (Fa. Huntsmen), Permabont ET-538 (Fa. Permabont) und vergleichbare Kleber.

Es ist aber auch grundsätzlich möglich, eine durch den Einsatz von mineralischen Fasern in ihrer Korrosionsschutzwirkung verbesserte Korrosionsschutzschicht durch geeignete Aufbringungsmaßnahmen wie zusätzlichen oder alternativen Kleber auf das zu schützende Substrat in Mattenform oder in Form anderer flächiger Gebilde aufzubringen. Erfindungsgemäß werden metallhaltige Substrate gegen Korrosion geschützt. Die erfindungsgemäße Verwendung ist im Prinzip in allen Bereichen einsetzbar in denen Metallkonstruktionen angewendet werden. Dabei ist es bevorzugt, dass die erfindungsgemäße Verwendung dort erfolgt, wo besonders große Korrosionsbelastung besteht, wie z. B. unter Wasser und insbesondere im Meerwasser.

Bei den zu schützenden Substraten handelt es sich um Wasserfahrzeuge, Stahlbeton oder um Windenergieanlagen. Besonders bevorzugt ist der Einsatz dabei für die Teile von Bauwerken, insbesondere Stahlbeton oder Stahlteile, die mit Wasser und insbesondere mit Salzwasser in Berührung kommen. So kann besonders bevorzugt der Schutz auch für die unter Wasser liegenden oder regelmäßig in Wasserberührung kommenden Teile von Offshore-Energiewindanlagen eingesetzt werden.

Für industrielle Verarbeitung ist es bevorzugt, dass die haftvermittelnde Schicht bzw. die Korrosionsschutzschichtmatrix sprühbar ist, um eine schnelle Verarbeitung zu gewährleisten. Für höhere Anforderungen hinsichtlich des Korrosionsschutzes und/oder mechanischer Belastbarkeit ist es bevorzugt, die erfindungsgemäß zu verwendenden Fasern in Form von Flächengebilden mit einer Flächendichte ≥ 1000 g/m³ einzusetzen. Alternativ oder zusätzlich ist ein Aufbringen von mehreren Korrosionsschutzschichten unter der erfindungsgemäßen Verwendung in einem Mehrschichtverfahren wie z. B. bei Verbundwerkstoffen bevorzugt.

Wie bereits oben angedeutet besitzt die erfindungsgemäße Verwendung neben dem Vorteil der Korrosionsschutzverbesserung auch den Vorteil einer mechanischen Verbesserung: So können insbesondere in Verbindung mit dauerelastischen Matrizen für die Korrosionsschutzschicht Beschichtungen erzeugt werden, die gegenüber den üblichen im Einsprühverfahren aufgebrachten Korrosionsschutzschichten den Vorteil einer höheren Flexibilität bei Verformung (z. B. aufgrund der Wärmedehnung des Substrates, oder aufgrund von Verformungen durch Wind und Wellen) besitzen.

### Beispiel1 Korrosionsschutz

Eine Stahlplatte (Schwarzblech) der Größe 200*400mm wurde gesandstrahlt mittels Oberflächenstrahlung, Sandstrahlen Körnung 2,5. Anschließend wurde die bearbeitete Oberfläche mit Isopropanol gereinigt. Es folgte der Auftrag eines Klebers (Permabond ET 538), Fa. Permabond mit einem spezial angefertigtem Spachtel in einer Schichtdicke 0,3 mm. In diese Schicht wurde flächendeckend eine Basaltstoffmatte einer Dichte von 360 g/m², Webart Köperbindung, Stoffdicke ca. 340 µm eingebracht.

Der Kleber wurde bei Raumtemperatur ausgehärtet. Die sich ergebende Haftung der Schicht war so groß, dass die Basaltstoffmatte riss, bevor sich die Korrosionsschutzschicht als Gesamtheit (inklusive des Klebers) von dem Substrat löste.

Durch die aufgebrachte Beschichtung wurde ein verbesserter Korrosionsschutz erzielt gegenüber einer vergleichbaren Beschichtung, in der das Basalt-Faser-Material durch entsprechendes Klebermaterial ersetzt wurde. Diese Verbesserung ist im Kesternichtest belegbar.

Gute Ergebnisse werden allgemeinen auch erzielt mit Basaltstoffgeweben einer größeren Stoffdicke, bevorzugt von 340 - 2000 µm. Alternativ oder zusätzlich bevorzugt können allgemein auch alternative Webstrukturen sein, wie z. B. eine Leinwandbindung, insbesondere bestehend aus 100*1*2 in der Kette und 300*1 im Schuss, Einstellung 100/60.

Weiter bevorzugt sind Fibrillendurchmesser vom 9 - 12 µm, und/oder eine Garnfeinheit von 80 - 2500 tex, insbesondere eine Garnfeinheit von 80 - 1600 tex. Weiterhin bevorzugt ist es, eine Stapelfaser und/oder gezwirntes Garn einzusetzen.

### Beispiel 2 Kondensatwasserwechseltest nach RPB 2010 (BAW Karlsruhe) Prüfung der einseitigen Unterrostung an Prüfplatten mit verschiedenen Schichtaufbauten

### Unterrostungsergebnisse

**Tabelle 1**

| **Platten-Nr.** | **Prüf.-Nr.** | **Systemaufbau** | **Unterrostung am Ritz S1 Soll: ≤ 1,00 mm** | **Unterrostung am Ritz S2 Soll: ≤ 1,00 mm** | **Unterrostung am Ritz S3 Soll: ≤ 1,00 mm** |
|---|---|---|---|---|---|
| Platte 1 | 227-11 | Zinkstaub / Kleiberit / Gewebe | 0,20 | 0,15 | 0,21 |
| Platte 2 | 228-11 | Zinkstaub / Permabond / Gewebe | 0,16 | 0,15 | 0,24 |
| Platte 3 | 229-11 | Kleiberit / Gewebe | 1,41 | 1,64 | 1,41 |
| Platte 4 | 230-11 | Permabond / Gewebe | 1,12 | 0,85 | 0,59 |

| | | | | | |
|---|---|---|---|---|---|
| S = in Salzlösung | | | | | |

Für den Unterrostungsversuch werden die Probenplatten auf eine Größe von 150 x 100 x 4 mm herausgearbeitet und jeweils mit einer definierten Verletzung (maschinell mit 2,0 mm Breite) bis zum metallischen Untergrund versehen.

Die eingesetzten Probeplatten wurden analog zum Beispiel 1 hergestellt, wobei die Platte 4 (Permabond/Gewebe) eine gemäß Beispiel 1 hergestellte Prüfplatte war.

Die Platte Kleiberit/Gewebe wurde analog der Platte Permabond/Gewebe eingestellt, wobei der eingesetzte Kleber der 2K-PUR-Klebstoff VP 9737/3 (Kleiberit) der Firma Klebchemie M. G. Becker GmbH & Co. KG, Weingart war und gemäß den Produktvorschriften aufgetragen wurde.

Für die Platten 1 und 2 wurde die jeweilige Kleber-/Gewebekorrosionsschutzschicht mit einer zinkstaubhaltigen Epoxidschicht unterlegt (in der Tabelle mit "Zinkstaub" beschrieben). Das eingesetzte Material war Interzink 72 der Firma AkzoNobel. Diese zinkhaltige Schicht (90 Gew.-% Zink in der ausgehärteten Schicht) wurde auf die Stahlplatten aufgetragen und nachfolgend die (zusätzliche) Korrosionsschutzschicht aufgebracht.

Es zeigt sich, dass durch den Einsatz der zinkhaltigen Schicht der Korrosionsschutz noch einmal erheblich verbessert wird. Es ist aber zu beachten, dass im vorliegenden Versuch die mechanische Verletzung der Schutzschicht unabhängig von ihrer mechanischen Widerstandsfähigkeit vorgenommen wurde. Somit lässt sich zwar ein Korrosionsschutz belegen, es ist aber zu erwarten, dass der Einsatz des Basaltgewebes insbesondere beim Einsatz im Meer noch deutlich verbesserte Ergebnisse zeigt.

### Beispiel 3 Ergebnisse der Haftabzugsprüfung

**Tabelle 2**

| **Platten-Nr.** | **Prüf.-Nr.** | **Aufbau** | **Haftabzugswert 1. Messung [MPa]*** | **Haftabzugswert 2. Messung [MPa]** | **Bruchbild** |
|---|---|---|---|---|---|
| Platte 1 | 227-11 | Zinkstaub / Kleiberit / Gewebe | 6,1 | 5,9 | 100 % C/D Adhäsionsbruch zwischen Kleber und Gewebelage |
| Platte 2 | 228-11 | Zinkstaub / Permabond / Gewebe | 3,4 | 3,2 | 100 % B Kohäsionsbruch in der Zinkstaubgrundierung |

In Beispiel 3 wurden die Platten 1 und 2 analog zu den Platten 1 und 2 aus Beispiel 2 eingesetzt.

Ein ganz besonders überraschendes Ergebnis lässt sich hier feststellen, da der polyurethanhaltige Kleber (Kleiberit) zu einem Adhäsionsbruch zwischen Kleber und Gewebelage führte, wobei der Haftabzugswert gegenüber dem epoxidhaltigen Kleber deutlich verbessert wurde.

Beim epoxidhaltigen Kleber (Permabond) fand ein Korrosionsbruch in der Zinkstaubgrundierung statt. Einen solchen Korrosionsbruch hätte man auch bei Platte 1 erwarten können, da der Korrosionsbruch bereits bei einem sehr viel geringeren Haftabzugswert auftrat. Offensichtlich führt polyurethanhaltiger Kleber allgemein überraschenderweise zu einer zusätzlichen Stabilisierung der zinkstaubhaltigen Schicht. Es wird davon ausgegangen, dass dieses Ergebnis verallgemeinert werden kann.

## Patentansprüche

1. Verwendung von mineralischen Fasern oder Filamenten zur Verbesserung der Korrosionsschutzwirkung einer Korrosionsschutzschicht, wobei ein metallhaltiges Substrat gegen Korrosion geschützt wird, wobei die Korrositionsschutzwirkung nach dem Kesternichtest gemäß den Normen DIN EN ISO 6988 und DIN 50018 und/oder gemäß dem Kondensatwasserwechseltest nach RPB 2010 (BAW Karlsruhe) und/oder die Korrosionsschutzwirkung im Meer, insbesondere in der Nordsee, festgestellt wird, wobei die mineralischen Fasern oder Filamente ≥ 50 Gew.-% SiO₂ umfassen, wobei die Korrosionsschutzschicht eine Matrix aus einem Material umfasst, ausgewählt aus der Gruppe bestehend aus Lack und Klebstoff und wobei die mineralischen Fasern oder Filamente in Form eines Flächengebildes eingesetzt werden, wobei das Flächengebilde ausgewählt ist aus der Gruppe bestehend aus Gewebe, Gewirk, Geflecht und Vlies und/oder in Multiaxialtechnik erstellt wurde, und vollständig von der Matrix umschlossen sind, wobei es sich bei dem methallhaltigen Substrat um Wasserfahrzeuge, Stahlbeton oder um Windenergieanlagen handelt, wobei die mineralischen Fasern oder Filamente Basaltfasern sind.

2. Verwendung nach Anspruch 1, wobei die Matrix auf einem Polymer auf Basis von Epoxid, Urethan, Acrylat, Alkyd, Vinylacetat, sowie deren Mischungen und deren Copolymeren basiert.

3. Verwendung nach Anspruch 1 oder 2, wobei die mineralischen Fasern oder Filamente enthaltende Schicht auf Seiten des zu schützenden Substrates wenigstens teilweise mit einer zinkhaltigen Schicht eingesetzt werden.

4. Verwendung nach einem der vorangehenden Ansprüche, wobei das Flächengebilde aus miteinander verwebten Strängen von Kett- u. Schussfäden besteht.

5. Verwendung nach einem der vorangehenden Ansprüche, wobei der Korrosionschutz unter Wasser bevorzugt unter Salzwasser erfolgt.

## Claims

1. The use of mineral fibres or filaments to improve the anti-corrosive effect of a corrosion protection layer, wherein a substrate that contains metal is protected against corrosion, wherein the anti-corrosive effect is established according to the Kesternich test according to the norms DIN EN ISO 6988 and DIN 50018 and/or according to the condensation water switching test according to RPB 2010 (German Federal Waterways Engineering and Research Institute - BAW Karlsruhe) and/or the anti-corrosive effect is established in the sea, in particular in the North Sea, wherein the mineral fibres or filaments comprise ≥ 50% by weight of SiO₂, wherein the corrosion protection layer comprises a matrix of a material that is selected from the group consisting of varnish and adhesive and wherein the mineral fibres or filaments are deployed in the form of a fabric, wherein the fabric is selected from the group consisting of woven fabric, knit fabric, mesh and non-woven fabric and/or has been produced in a multiaxial technique, and are completely enclosed by the matrix, wherein the substrate that contains metal is water craft, reinforced concrete or wind power installations, wherein the mineral fibres or filaments are basalt fibres.

2. Use according to claim 1, wherein the matrix is based on a polymer on a basis of epoxide, urethane, acrylate, alkyd, vinyl acetate, as well as blends thereof and copolymers thereof.

3. Use according to claim 1 or 2, wherein the layer containing mineral fibres or filaments on the side of the substrate that is to be protected is deployed at least partially with a layer that contains zinc.

4. Use according to one of the preceding claims, wherein the fabric consists of strands of warp and weft threads that are interwoven with one another.

5. Use according to one of the preceding claims, wherein the corrosion protection under water preferably takes place under salt water.

## Revendications

1. Utilisation de fibres ou de filaments minéraux en vue d'améliorer l'effet anticorrosif d'une couche de protection contre la corrosion, **caractérisé en ce qu'**un substrat qui contient du métal est protégé contre la corrosion, **caractérisé en ce que** l'effet anticorrosif est déterminé selon le test de Kesternich conformément aux normes DIN EN SO 6988 et DIN 50018 et/ou conformément au test d'échange de l'eau de condensation conformément à la norme RPB 2010 (BAW Karlsruhe) et/ou **en ce que** le test de l'effet anticorrosif est déterminé en mer, plus particulièrement en Mer du Nord, **caractérisé en ce que** les fibres ou les filaments minéraux comprennent ≥ 50% en poids de SiO₂, **caractérisé en ce que** la couche de protection contre la corrosion comporte une matrice en matériau qui est sélectionné dans le groupe composé de vernis et d'adhésif, et **caractérisé en ce que** les fibres ou les filaments minéraux sont déployés sous forme d'étoffe, **caractérisé en ce que** l'étoffe est sélectionnée dans le groupe composé d'étoffe tissée, d'étoffe tricotée, de maille et d'étoffe non tissée et/ou **en ce qu'**elle a été produite au moyen d'une technique multiaxiale, et **en ce que** les fibres ou les filaments minéraux sont totalement entourés par la matrice, **caractérisé en ce que** le substrat qui contient du métal est employé à bord d'embarcations, ou bien dans le béton armé ou les installations éoliennes, **caractérisé en ce que** les fibres ou les filaments minéraux sont des fibres de basalte.

2. Utilisation selon la revendication 1, **caractérisée en ce que** la matrice se base sur un polymère composé d'époxy, d'uréthane, d'acrylate, d'acétate de vinyle ainsi que de mélanges de ces produits et de copolymères de ces produits.

3. Utilisation selon la revendication 1 ou 2, **caractérisée en ce que** la couche qui contient des fibres ou des filaments minéraux sur le côté du substrat qui doit être protégé est déployée au moins en partie avec une coucha qui contient du zinc.

4. Utilisation selon l'une quelconque des revendications précédentes, **caractérisée en ce que** le tissu est composé de fils de chaîne et de trame entrelacés les uns avec les autres.

5. Utilisation selon l'une quelconque des revendications précédentes, **caractérisée en ce que** la protection contre la corrosion sous l'eau est assurée de préférence sous de l'eau salée.
